# EUROPEAN PATENT SPECIFICATION

(11) **EP 4 358 811 B1**
(45) Date of publication and mention of the grant of the patent: **13.11.2024**
(21) Application number: 22744047.6
(22) Date of filing: 22.06.2022
(51) Int. Cl.: A47J 43/07, A23G 9/22, A47J 43/08

(54) **BOWL ASSEMBLY FOR A MICRO PUREE MACHINE**
SCHÜSSELANORDNUNG FÜR EINE MIKROPÜREMASCHINE
ENSEMBLE CUVETTE POUR MACHINE À MICROPURÉE

(30) Priority: 25.06.2021 US 202163215144 P; 17.06.2022 US 202217843106
(43) Date of publication of application: 01.05.2024
(60) Divisional application: 24153287.8
(73) Proprietor: SharkNinja Operating LLC, Needham, MA 02494 (US)
(72) Inventor: DENG, Xu Sheng, Needham, MA 02494 (US); JONES, Zintis, Needham, MA 02494 (US); O'LOUGHLIN, Nicholas M., Needham, MA 02494 (US); POWER, Michelle Hilary, Needham, MA 02494 (US)
(74) Representative: Harris, Oliver John Richard
(86) International application number: PCT/US2022/034549
(87) International publication number: WO 2022/271845

(56) References cited:
- WO-A1-97/36498
- US-A1- 2007 297 282
- US-A1- 2021 022 365

## Description

### FIELD OF THE INVENTION

The present disclosure relates to a food processing device and, more particularly, to a bowl assembly of a micro puree machine for making frozen foods and drinks.

### BACKGROUND

Home use machines that are intended to make ice creams, gelatos, frozen yogurts, sorbets and the like are known in the art. Typically, a user adds a series of non-frozen ingredients to a beaker. The ingredients are then churned by a paddle while a refrigeration mechanism simultaneously freezes the ingredients. These devices have known shortcomings including, but not limited to, the amount of time and effort required by the user to complete the ice cream making process. Machines of this nature are impractical for preparing most non-dessert food products.

An alternative type of machine known to make a frozen food product is a micro-puree machine. Typically, machines of this nature spin and plunge a blade into a pre-frozen ingredient or combination of ingredients. While able to make frozen desserts like ice creams, gelatos, frozen yogurts, sorbets and the like, micro puree style machines can also prepare non-dessert types of foods such as non-dessert purees and mousses. In addition, consumers can prepare either an entire batch of ingredients or a pre-desired number of servings.

Some current micro puree machines have both a position motor subassembly for moving the spinning blade up and down relative to the ingredients, and a separate drive motor subassembly for rotating the blade. In these cases, the drive motor subassembly may be required to move up and down with the position motor subassembly, complicating the internal drive mechanisms.

US 2007/297282 A1 describes an electric mixer to modify the consistency of the phase of a confectionery product, that includes a container for the product, a member closing the container and a tool for working the product which are in line with each other and a movement device capable of moving the container. The movement device includes a first reversible movement of the open container with respect to the closing member between an initial position in which the container is open and a final position in which the container is closed, and a second reversible movement of the closed container with respect to the tool between an initial position of minimum penetration of the tool into the container and a final position of maximum penetration of the tool into the container. WO 97/26498 A1 discloses an apparatus, preferably a domestic or culinary appliance, which is suitable for producing creamy or mousse-like food. The apparatus comprises a vessel for holding food which is substantially in block form. A mincing arrangement (3, 4, 5) with variable advance of a mincing member (19) in the direction of the vessel comprises a rotary blade at its end facing the vessel. Means (6) are also provided for varying the ratio between the speed of rotation of the blade and the advance speed. US 2021/022365 A1 describes a device for shredding deep-frozen food products in block form that comprises a tool which is rotated around an axis of rotation (X) and advanced towards the block, thereby scraping off layers from the block. The device comprises two drive motors for generating rotational and feed movements of the tool, which can be controlled separately, at least one being of variable-speed. The device also includes a gear arrangement coupled to the drive motors in such a way that only one of the drive motors rotates the tool and other drive motors together serve to feed the tool, in a way that at a certain rotational speed ratio of the two drive motors the tool is rotated without axial movement of the latter and, at other rotational speed ratios advancing or retracting movement of the tool along the axis of rotation (X) occurs

### SUMMARY

The invention is set out in the appended set of claims. This disclosure describes a micro puree machine having a spinning bowl assembly, which solves the problems of the prior art. The bowl assembly includes a beaker removeably attachable to a beaker coupling located inside a bowl. The beaker coupling operatively couples to a rotation motor subassembly for rotation of the beaker coupling (and hence the beaker) relative to the bowl while the mixing blade for mixing ingredients remains stationary. The bowl in turn locks onto a bayonet structure on a base of the micro puree machine, which secures the bowl in position on the base while the beaker coupling and the beaker rotate.

Embodiments of the micro puree machine of this disclosure may include one or more of the following, in any suitable combination.

In embodiments, a micro puree machine of this disclosure includes a bowl assembly. The bowl assembly includes a beaker configured to receive ingredients therein. The beaker has a bottom surface that includes at least one first alignment structure. A beaker coupling is configured to receive the beaker therein. The beaker coupling has an upper surface that includes at least one second alignment structure. A bowl is configured to receive the beaker coupling and the beaker therein. The beaker coupling is operatively coupled to a drive motor for rotation about an axis relative to the bowl. The at least one first alignment structure is complementary to the at least one second alignment structure such that, when the beaker is positioned within the beaker coupling, the at least one first alignment structure and the at least one second alignment structure prevent rotation of the beaker relative to the beaker coupling.

In further embodiments, the bowl has a bottom surface that includes at least one coupling member configured to receive and attach to a portion of a platform of the micro puree machine. In embodiments, the beaker has an upper rim that defines an outwardly projecting lip along a portion of the rim. In embodiments, the at least one second alignment structure extends upward into a beaker volume defined by the beaker. In embodiments, the at least one second alignment structure is positioned closer to an outer circumference of the beaker coupling than to a central axis of the beaker coupling. In embodiments, the at least one first alignment structure creates a void on the exterior bottom surface of the beaker. In embodiments, the at least one first alignment structure and the at least one second alignment structure are generally rectangular. In embodiments, the at least one first alignment structure comprises at least three first alignment structures. In embodiments, the at least one second alignment structure comprises at least three second alignment structures. In embodiments, the beaker coupling is attached to a drive motor coupling of the drive motor.

In embodiments, a method of operating a micro puree machine of this disclosure includes positioning a beaker within a beaker coupling of the micro puree machine. The beaker is configured to receive ingredients therein. The beaker has a bottom surface that includes at least one first alignment structure. The beaker coupling has an upper surface that includes at least one second alignment structure. The beaker coupling is located within a bowl. The method also includes attaching the bowl to a platform of the micro puree machine. The beaker coupling is operatively coupled to a drive motor for rotation about an axis relative to the bowl. The at least one first alignment structure is complementary to the at least one second alignment structure such that, when the beaker is positioned within the beaker coupling, the at least one first alignment structure and the at least one second alignment structure prevent rotation of the beaker relative to the beaker coupling.

In further embodiments, the bowl has a bottom surface that includes at least one coupling member configured to receive and attach to a portion of the platform of the micro puree machine. In embodiments, the beaker has an upper rim that defines an outwardly projecting lip along a portion of the rim. In embodiments, the at least one second alignment structure extends upward into a beaker volume defined by the beaker. In embodiments, the at least one second alignment structure is positioned closer to an outer circumference of the beaker coupling than to a central axis of the beaker coupling. In embodiments, the at least one first alignment structure creates a void on the exterior bottom surface of the beaker. In embodiments, the at least one first alignment structure includes at least three first alignment structures. In embodiments, the at least one second alignment structure includes at least three second alignment structures. In embodiments, the beaker coupling is attached to drive motor coupling of the drive motor.

A reading of the following detailed description and a review of the associated drawings will make apparent the advantages of these and other structures. Both the foregoing general description and the following detailed description serve as an explanation only and do not restrict aspects of the disclosure as claimed.

### BRIEF DESCRIPTION OF THE DRAWINGS

Reference to the detailed description, combined with the following figures, will make the disclosure more fully understood, wherein:
FIGS. 1 and 2 show a micro puree machine of this disclosure according to some embodiments;
FIGS. 3 shows a blade assembly of this disclosure according to some embodiments;
FIGS. 4A and 4B show a beaker assembly of this disclosure in an assembled view (FIG. 4A) and a disassembled view (FIG. 4B) according to some embodiments;
FIG. 4C shows a cross-sectional view of the beaker assembly of this disclosure according to some embodiments;
FIGS. 5A and 5B illustrate a platform (FIG. 5A) and a bowl attachable to the platform (FIG. 5B) of this disclosure according to some embodiments; and
FIG. 6 shows a cross-sectional view of the bowl assembly of this disclosure according to some embodiments.

### DETAILED DESCRIPTION

In the following description, like components have the same reference numerals, regardless of different illustrated embodiments. To illustrate embodiments clearly and concisely, the drawings may not necessarily reflect appropriate scale and may have certain structures shown in somewhat schematic form. The disclosure may describe and/or illustrate structures in one embodiment, and in the same way or in a similar way in one or more other embodiments, and/or combined with or instead of the structures of the other embodiments.

In the specification and claims, for the purposes of describing and defining the invention, the terms "about" and "substantially" represent the inherent degree of uncertainty attributed to any quantitative comparison, value, measurement, or other representation. The terms "about" and "substantially" moreover represent the degree by which a quantitative representation may vary from a stated reference without resulting in a change in the basic function of the subject matter at issue. Open-ended terms, such as "comprise," "include," and/or plural forms of each, include the listed parts and can include additional parts not listed, while terms such as "and/or" include one or more of the listed parts and combinations of the listed parts. Use of the terms "top," "bottom," "above," "below" and the like helps only in the clear description of the disclosure and does not limit the structure, positioning and/or operation of the feed chute assembly in any manner.

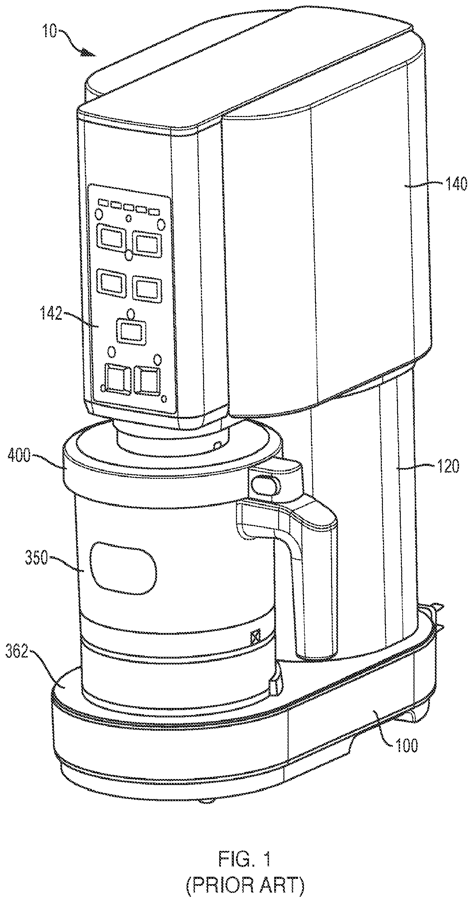

FIG. 1 shows an isometric view of a micro puree machine 10 according to an illustrative embodiment of the present disclosure. The micro puree machine 10 may include a lower housing or base 100 and an upper housing 140. A middle housing 120 may extend between the lower housing 100 and the upper housing 140. The upper housing 140 may include an interface 142 for receiving user inputs to control the micro puree machine 10 and/or display information. The micro puree machine 10 may also include a removable bowl 350 and a lid 400 coupled to the bowl 350. The bowl 350 may contain one or more pre-frozen ingredients for processing. A user may place the bowl 350 and the lid 400 on the lower housing 100. The user then may rotate the bowl 350 and the lid 400 on a lifting platform 362 from a down position to an up position, and vice versa.

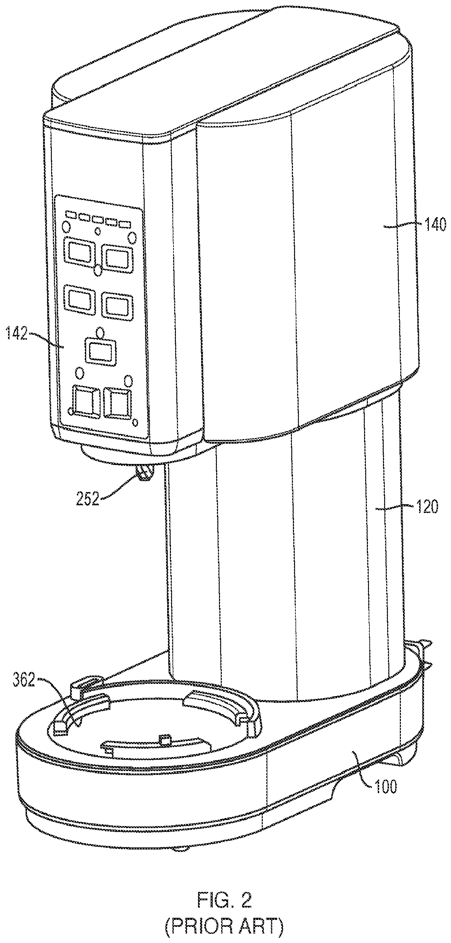

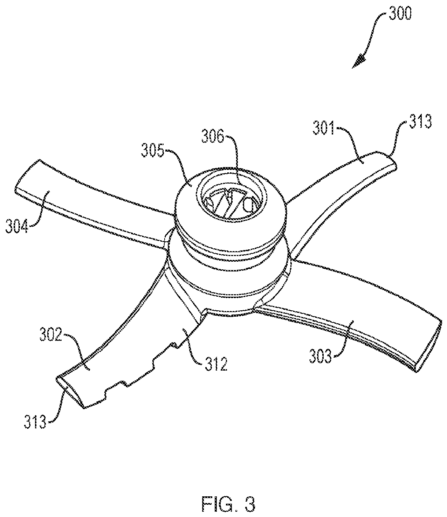

FIG. 2 shows the micro puree machine 10 of FIG. 1 with the bowl 350 removed for ease of illustration. When the user raises the bowl 350 and the lid 400 vertically to the up position, a blade 300 (FIG. 3) within the lid 400 engages with a mixing shaft 252 extending from the upper housing 140. The mixing shaft 252 delivers a rotational force to the blade 300 to spin one or more blades as they engage with ingredients inside the bowl 350. Further non-limiting embodiments of the micro puree machine 10 are described in U.S. Patent No. 11,154,163 to SharkNinja Operating, LLC (Needham, MA), the contents of which are incorporated herein by reference in their entirety.

FIG. 3 shows an isometric view of an embodiment of the blade 300 of this disclosure. Embodiments of the blade 300 can comprise a unitary structure or distinct structures joined together either directly or indirectly. In embodiments, the material of the blade 300 may comprise cast stainless steel with a PVD titanium coating. The blade 300 may comprise one or more cutting arms 301, 302 (for example, two as shown) and one or more mixing arms 303, 304 (for example, two as shown). The blade 300 may further comprise a central support hub 305. The cutting arms 301, 302 and the mixing arms 303, 304 extend outward from the central support hub 305. The central support hub 305 may define a central opening 306 for accepting the mixing shaft 252 (FIG. 2). The cutting arms 301 and 302 may comprise a horizontally extending length having a proximal end 312 and a distal end 313. The proximal end 312 may meet the central support hub 305. Likewise, mixing arms 303, 304 may extend from the central support hub 305 and may be generally positioned in an opposing orientation. In embodiments, the blade 300 may be configured to move up and down with the vertical movement of the mixing shaft 252 relative to the upper housing 140.

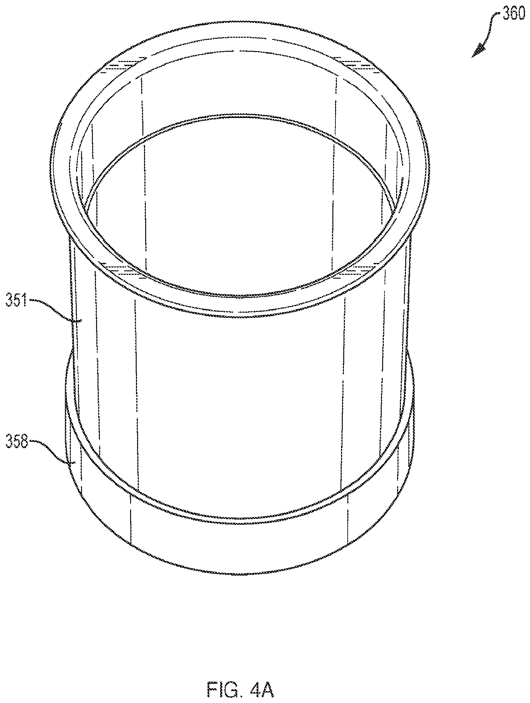

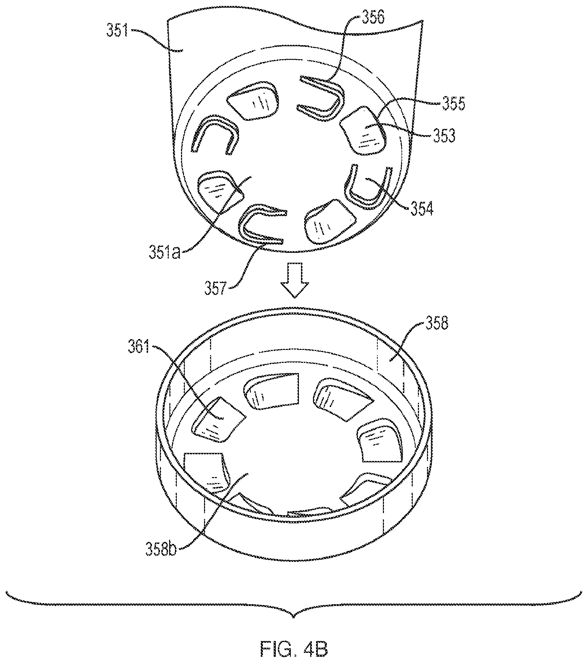

FIGS. 4A and 4B illustrates an embodiment of the beaker assembly 360 of this disclosure in an assembled view (FIG. 4A) and a disassembled view (FIG. 4B). As shown in FIG. 4A, the beaker assembly 360 may include a beaker 351 and a beaker coupling 358. In embodiments, the beaker assembly 360 is sized to fit within the bowl 350 (FIG. 1). As shown in FIG. 4B, the beaker 351 may have one or more alternating beaker alignment structures 353, 354 on the bottom surface 351a of the beaker 351. The beaker alignment structures 353, 354 may be generally rectangular and may create a void on the exterior bottom surface of the beaker 351. In embodiments, the number of coupling structures 353, 354 is at maximum eight structures 353, 354, as shown. However, the disclosure also contemplates as few as three structures 353, 354. In an illustrative embodiment, the beaker alignment structures 353 have a peripheral wall 355 that meets the bottom surface 351a of the beaker 351 at an angle. The alignment structures 354 have a peripheral wall 356 that creates a vertical face 357. Once the beaker 351 is joined with the beaker coupling 358, the vertical face 357 prevents rotation of the beaker 351 relative to the beaker coupling 358 when the moving blade assembly 300 is operating during use of the device. The beaker alignment structures 353, 354 also prevent ingredients from rotational movement relative to the beaker 351 in the direction of the movement of the beaker 351 during use. In embodiments, the beaker 351 can be manufactured from a disposable material to enhance the convenience of using the micro puree machine 10. Further, the beaker 351 can be sold as a stand-alone item, and further can be prefilled with ingredients to be processed during use of the micro puree machine 10.

Still referring to FIGS. 4A and 4B, the top surface 358b of the beaker coupling 358 may comprise one or more alignment structures 361 that extend upward into the beaker 351. The alignment structures 361 may be generally rectangular and may engage with the alignment structures 353, 354 on the bottom surface 351a of the beaker 351. The vertical faces 357 of the beaker alignment structures 354 may abut the beaker coupling alignment structures 361 to prevent the relative rotational movement of the beaker 351 within the beaker coupling 358 during use of the micro puree machine 10. The alignment structures 361 may be positioned closer to an outer circumference of the beaker coupling 358 than to a central axis of the beaker coupling 358.

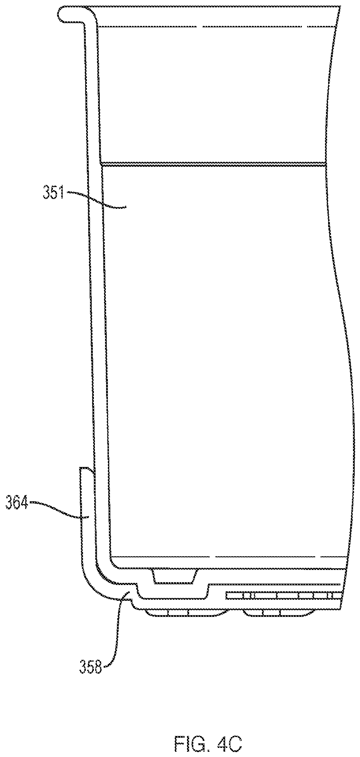

FIG. 4C shows a cross-sectional view of the beaker 351 assembled to the beaker coupling 358 according to an embodiment of this disclosure. As shown in FIG. 4C, a height of a wall 364 of the beaker coupling 358 may be selected to aid in the fixing of the beaker 351 to prevent the beaker 351 from moving during rotation of the beaker coupling 358.

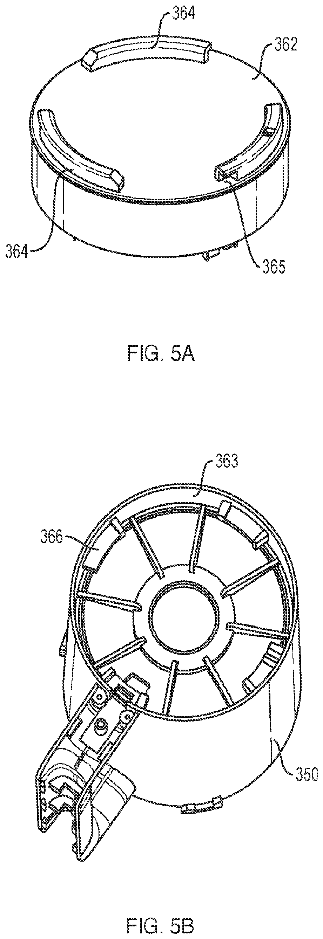

FIG. 5A is an isometric view of the top of the lifting platform 362 according to an embodiment of this disclosure. FIG. 5B is an isometric view of the bowl 350, which may be coupleable to the lifting platform 362. For example, as shown in FIG. 5B, the bowl 350 may comprise locating and locking elements for positioning and connecting the bowl 350 to the top of the lifting platform 362. For example, as can be seen in FIG. 5B, the underside of the bowl 350 may comprise one or more indentations 363 sized to receive corresponding projections 364 on the top of the lifting platform 362. At least one such projection on the top of the lifting platform 362 may comprise a cutaway 365 to receive a corresponding ledge 366 on the bowl 350 when the bowl 350 is rotated on the lifting platform 362, locking the bowl 350 and the lifting platform 362 together.

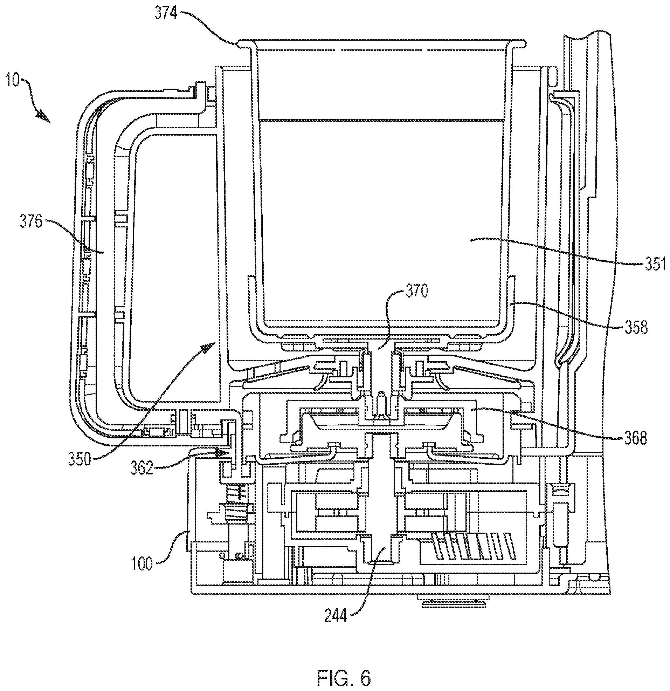

FIG. 6 illustrates a cross-sectional view of the beaker 351 and beaker coupling 358 inserted into the bowl 350 according to an embodiment of this disclosure. In embodiments, the beaker coupling 351 may attach to a drive motor coupling 368, which is operatively coupled to a drive motor 244 via a shaft 370 for rotation of the beaker coupling 368 (and hence the beaker 351) within the bowl 350. In embodiments, when the beaker 351 is coupled to the beaker coupling 351, an outward facing flange 374 extends above the bowl 350 to act as a gripping surface for the ease of removal of the beaker 351 from the bowl 350. Activation of the drive motor occurs 244 when an interlock lever 376 integrated into a handle 378 of the bowl 350 which depresses a micro-switch located in the base 100 of the micro puree machine 10.

While the disclosure particularly shows and describes preferred embodiments, those skilled in the art will understand that various changes in form and details may exist without departing from the scope of the present application as defined by the appended claims. The scope of this present application intends to cover such variations. As such, the foregoing description of embodiments of the present application does not intend to limit the full scope conveyed by the appended claims.

## Claims

1. A micro puree machine (10) including a bowl assembly, the bowl assembly comprising:
a beaker (351) configured to receive ingredients therein, the beaker (351) comprising a bottom surface (351a) that includes at least one first alignment structure (353, 354);
a beaker coupling (358) configured to receive the beaker (351) therein, the beaker coupling (358) comprising an upper surface (358b) that includes at least one second alignment structure (361); and
a bowl (350) configured to receive the beaker coupling (358) and the beaker (351) therein;
wherein the at least one first alignment structure (353, 354) is complementary to the at least one second alignment structure (361) such that, when the beaker (351) is positioned within the beaker coupling (358), the at least one first alignment structure (353, 354) and the at least one second alignment structure (361) prevent rotation of the beaker (351) relative to the beaker coupling (358), **characterized in that** the beaker coupling (358) is operatively coupled to a drive motor (244) for rotation about an axis relative to the bowl (350).

2. The micro puree machine of claim 1, wherein the bowl (350) comprises a bottom surface that includes at least one coupling member configured to receive and attach to a portion of a platform (362) of the micro puree machine.

3. The micro puree machine of claim 1, wherein the beaker (351) comprises an upper rim that defines an outwardly projecting lip along a portion of the rim.

4. The micro puree machine of claim 1, wherein the at least one second alignment structure (361) extends upward into a beaker volume defined by the beaker (351).

5. The micro puree machine of claim 1, wherein the at least one second alignment structure (361) is positioned closer to an outer circumference of the beaker coupling (358) than to a central axis of the beaker coupling (358).

6. The micro puree machine of claim 1, wherein the at least one first alignment structure (353, 354) creates a void on the exterior bottom surface of the beaker (351).

7. The micro puree machine of claim 1, wherein the at least one first alignment structure (353, 354) is generally rectangular.

8. The micro puree machine of claim 1, wherein the at least one second alignment structure (361) is generally rectangular.

9. The micro puree machine of claim 1, wherein the at least one first alignment structure (353, 354) comprises at least three first alignment structures.

10. The micro puree machine of claim 1, wherein the at least one second alignment structure (361) comprises at least three second alignment structures.

11. The micro puree machine of claim 1, wherein the beaker (351) coupling is attached to a drive motor coupling (368) of the drive motor (244).

12. A method of operating a micro puree machine (10) comprising:
positioning a beaker (351) within a beaker coupling (358) of the micro puree machine (10), the beaker (351) configured to receive ingredients therein, the beaker (351) comprising a bottom surface (351a) that includes at least one first alignment structure (353, 354), the beaker coupling (358) comprising an upper surface that includes at least one second alignment structure (361), the beaker coupling (358) located within a bowl (350); and
attaching the bowl (350) to a platform (362) of the micro puree machine (10);
wherein the beaker coupling (358) is operatively coupled to a drive motor (244) for rotation about an axis relative to the bowl (350); and
wherein the at least one first alignment structure (353, 354) is complementary to the at least one second alignment structure (361) such that, when the beaker (351) is positioned within the beaker coupling (358), the at least one first alignment structure (353, 354) and the at least one second alignment structure (361) prevent rotation of the beaker (351) relative to the beaker coupling (358).

13. The method of claim 12, wherein the bowl (350) comprises a bottom surface that includes at least one coupling member configured to receive and attach to a portion of the platform (362) of the micro puree machine (10).

14. The method of claim 12, wherein the beaker (351) comprises an upper rim that defines an outwardly projecting lip along a portion of the rim.

15. The method of claim 12, wherein the at least one second alignment structure (361) extends upward into a beaker volume defined by the beaker (351).

## Patentansprüche

1. Mikropüreemaschine (10), die eine Schüsselanordnung beinhaltet, wobei die Schüsselanordnung Folgendes umfasst:
einen Becher (351), der dazu ausgelegt ist, Zutaten darin aufzunehmen, wobei der Becher (351) einem Bodenfläche (351a) umfasst, die mindestens eine erste Ausrichtungsstruktur (353, 354) beinhaltet;
eine Becherkopplung (358), die dazu ausgelegt ist, den Becher (351) darin aufzunehmen, wobei die Becherkopplung (358) eine Oberfläche (358b) umfasst, die mindestens eine zweite Ausrichtungsstruktur (361) beinhaltet; und
eine Schüssel (350), die dazu ausgelegt ist, die Becherkopplung (358) und den Becher (351) darin aufzunehmen;
wobei die mindestens eine erste Ausrichtungsstruktur (353, 354) zu der mindestens einen zweiten Ausrichtungsstruktur (361) komplementär ist, derart, dass, wenn der Becher (351) in der Becherkopplung (358) positioniert ist, die mindestens eine erste Ausrichtungsstruktur (353, 354) und die mindestens eine zweite Ausrichtungsstruktur (361) eine Drehung des Bechers (351) relativ zur Becherkopplung (358) verhindert, **dadurch gekennzeichnet, dass** die Becherkopplung (358) zur Drehung um eine Achse relativ zur Schüssel (350) an einen Antriebsmotor (244) wirkgekoppelt ist.

2. Mikropüreemaschine nach Anspruch 1, wobei die Schüssel (350) eine Bodenfläche umfasst, die mindestens ein Kopplungselement beinhaltet, das dazu ausgelegt ist, einen Abschnitt einer Plattform (362) der Mikropüreemaschine aufzunehmen und sich an demselben zu befestigen.

3. Mikropüreemaschine nach Anspruch 1, wobei der Becher (351) einen oberen Rand umfasst, der entlang eines Abschnitts des Rands eine nach außen vorstehende Lippe definiert.

4. Mikropüreemaschine nach Anspruch 1, wobei sich die mindestens eine zweite Ausrichtungsstruktur (361) nach oben in ein Bechervolumen erstreckt, das durch den Becher (351) definiert ist.

5. Mikropüreemaschine nach Anspruch 1, wobei die mindestens eine zweite Ausrichtungsstruktur (361) näher an einem Außenumfang der Becherkopplung (358) positioniert ist als an einer Mittelachse der Becherkopplung (358).

6. Mikropüreemaschine nach Anspruch 1, wobei die mindestens eine erste Ausrichtungsstruktur (353, 354) auf der äußeren Bodenfläche des Bechers (351) einen Hohlraum erstellt.

7. Mikropüreemaschine nach Anspruch 1, wobei die mindestens eine erste Ausrichtungsstruktur (353, 354) im Allgemeinen rechteckig ist.

8. Mikropüreemaschine nach Anspruch 1, wobei die mindestens eine zweite Ausrichtungsstruktur (361) im Allgemeinen rechteckig ist.

9. Mikropüreemaschine nach Anspruch 1, wobei die mindestens eine erste Ausrichtungsstruktur (353, 354) mindestens drei erste Ausrichtungsstrukturen umfasst.

10. Mikropüreemaschine nach Anspruch 1, wobei die mindestens eine zweite Ausrichtungsstruktur (361) mindestens drei zweite Ausrichtungsstrukturen umfasst.

11. Mikropüreemaschine nach Anspruch 1, wobei die Becher(351)-Kopplung an einer Antriebsmotorkopplung (368) des Antriebsmotors (244) befestigt ist.

12. Verfahren zum Betreiben einer Mikropüreemaschine (10), das Folgendes umfasst:
Positionieren eines Bechers (351) in einer Becherkopplung (358) der Mikropüreemaschine (10), wobei der Becher (351) dazu ausgelegt ist, Zutaten darin aufzunehmen, wobei der Becher (351) eine Bodenfläche (351a) umfasst, die mindestens eine erste Ausrichtungsstruktur (353, 354) beinhaltet, wobei die Becherkopplung (358) eine Oberfläche umfasst, die mindestens eine zweite Ausrichtungsstruktur (361) beinhaltet, wobei sich die Becherkopplung (358) in einer Schüssel (350) befindet; und
Befestigen der Schüssel (350) an einer Plattform (362) der Mikropüreemaschine (10);
wobei die Becherkopplung (358) zur Drehung um eine Achse relativ zur Schüssel (350) an einen Antriebsmotor (244) wirkgekoppelt ist; und
wobei die mindestens eine erste Ausrichtungsstruktur (353, 354) zu der mindestens einen zweiten Ausrichtungsstruktur (361) komplementär ist, derart, dass, wenn der Becher (351) in der Becherkopplung (358) positioniert ist, die mindestens eine erste Ausrichtungsstruktur (353, 354) und die mindestens eine zweite Ausrichtungsstruktur (361) eine Drehung des Bechers (351) relativ zur Becherkopplung (358) verhindert.

13. Verfahren nach Anspruch 12, wobei die Schüssel (350) eine Bodenfläche umfasst, die mindestens ein Kopplungselement beinhaltet, das dazu ausgelegt ist, einen Abschnitt der Plattform (362) der Mikropüreemaschine (10) aufzunehmen und sich an demselben zu befestigen.

14. Verfahren nach Anspruch 12, wobei der Becher (351) einen oberen Rand umfasst, der entlang eines Abschnitts des Rands eine nach außen vorstehende Lippe definiert.

15. Verfahren nach Anspruch 12, wobei sich die mindestens eine zweite Ausrichtungsstruktur (361) nach oben in ein Bechervolumen erstreckt, das durch den Becher (351) definiert ist.

## Revendications

1. Machine à micropurée (10) comprenant un ensemble de bol, l'ensemble de bol comprenant :
un bécher (351) configuré pour recevoir des ingrédients à l'intérieur de ce dernier, le bécher (351) comprenant une surface de fond (351a) qui comprend au moins une première structure d'alignement (353, 354) ;
un couplage de bécher (358) configuré pour recevoir le bécher (351) à l'intérieur de ce dernier, le couplage de bécher (358) comprenant une surface supérieure (358b) qui comprend au moins une seconde structure d'alignement (361) ; et
un bol (350) configuré pour recevoir le couplage de bécher (358) et le bécher (351) à l'intérieur de ce dernier ;
dans laquelle la au moins une première structure d'alignement (353, 354) est complémentaire de la au moins une seconde structure d'alignement (361) de sorte que, lorsque le bécher (351) est positionné à l'intérieur du couplage de bécher (358), la au moins une première structure d'alignement (353, 354) et la au moins une seconde structure d'alignement (361) empêchent la rotation du bécher (351) par rapport au couplage de bécher (358), **caractérisée en ce que** le couplage de bécher (358) est couplé de manière opérationnelle à un moteur d'entraînement (244) pour la rotation autour d'un axe par rapport au bol (350).

2. Machine à micropurée selon la revendication 1, dans laquelle le bol (350) comprend une surface de fond qui comprend au moins un élément de couplage configuré pour recevoir et se fixer à une partie d'une plateforme (362) de la machine à micropurée.

3. Machine à micropurée selon la revendication 1, dans laquelle le bécher (351) comprend un rebord supérieur qui définit une lèvre en saillie vers l'extérieur le long d'une partie du rebord.

4. Machine à micropurée selon la revendication 1, dans laquelle la au moins une seconde structure d'alignement (361) s'étend vers le haut dans un volume de bécher défini par le bécher (351).

5. Machine à micropurée selon la revendication 1, dans laquelle le au moins une seconde structure d'alignement (361) est positionnée plus à proximité d'une circonférence externe du couplage de bécher (358) que d'un axe central du couplage de bécher (358).

6. Machine à micropurée selon la revendication 1, dans laquelle la au moins une première structure d'alignement (353, 354) crée un vide sur la surface de fond extérieure du bécher (351) .

7. Machine à micropurée selon la revendication 1, dans laquelle la au moins une première structure d'alignement (353, 354) est généralement rectangulaire.

8. Machine à micropurée selon la revendication 1, dans laquelle la au moins une seconde structure d'alignement (361) est généralement rectangulaire.

9. Machine à micropurée selon la revendication 1, dans laquelle la au moins une première structure d'alignement (353, 354) comprend au moins trois premières structures d'alignement.

10. Machine à micropurée selon la revendication 1, dans laquelle la au moins une seconde structure d'alignement (361) comprend au moins trois secondes structures d'alignement.

11. Machine à micropurée selon la revendication 1, dans laquelle le couplage de bécher (351) est fixé à un couplage de moteur d'entraînement (368) du moteur d'entraînement (244).

12. Procédé pour faire fonctionner une machine à micropurée (10) comprenant les étapes consistant à :
positionner un bécher (351) à l'intérieur d'un couplage de bécher (358) de la machine à micropurée (10), le bécher (351) étant configuré pour recevoir des ingrédient à l'intérieur de ce dernier, le bécher (351) comprenant une surface de fond (351a) qui comprend au moins une première structure d'alignement (353, 354), le couplage de bécher (358) comprenant une surface supérieure qui comprend au moins une seconde structure d'alignement (361), le couplage de bécher (358) étant positionné à l'intérieur d'un bol (350) ; et
fixer le bol (350) sur une plateforme (362) de la machine à micropurée (10) ;
dans lequel le couplage de bécher (358) est couplé, de manière opérationnelle, à un moteur d'entraînement (244) pour la rotation autour d'un axe par rapport au bol (350) ; et
dans lequel la au moins une première structure d'alignement (353, 354) est complémentaire de la au moins une seconde structure d'alignement (361) de sorte que, lorsque le bécher (351) est positionné à l'intérieur du couplage de bécher (358), la au moins une première structure d'alignement (353, 354) et la au moins une seconde structure d'alignement (361) empêchent la rotation du bécher (351) par rapport au couplage de bécher (358) .

13. Procédé selon la revendication 12, dans lequel le bol (350) comprend une surface de fond qui comprend au moins un élément de couplage configuré pour recevoir et se fixer sur une partie de la plateforme (362) de la machine à micropurée (10).

14. Procédé selon la revendication 12, dans lequel le bécher (351) comprend un rebord supérieur qui définit une lèvre en saillie vers l'extérieur le long d'une partie du rebord.

15. Procédé selon la revendication 12, dans lequel la au moins une seconde structure d'alignement (361) s'étend vers le haut dans un volume de bécher défini par le bécher (351).
